# EUROPÄISCHE PATENTSCHRIFT

(11) **EP 0 705 634 B1**
(45) Veröffentlichungstag und Bekanntmachung des Hinweises auf die Patenterteilung: **20.01.1999**
(21) Anmeldenummer: 95111802.5
(22) Anmeldetag: 27.07.1995
(51) Int. Cl.: B01D 46/52, B01D 29/07

(54) **Filter**
Filter
Filtre

(30) Priorität: 29.08.1994 DE 4430333
(43) Veröffentlichungstag der Anmeldung: 10.04.1996
(73) Patentinhaber: FILTERWERK MANN & HUMMEL GMBH, 71631 Ludwigsburg (DE)
(72) Erfinder: Koch, Volker, D-70193 Stuttgart (DE); Luka, Helmut, D-70806 Kornwestheim (DE); Moser, Nikolaus, Dr., D-71254 Ditzingen (DE); Sommer, Bruno, D-71636 Ludwigsburg (DE); Wagner, Manfred, D-70597 Stuttgart (DE)
(74) Vertreter: Voth, Gerhard, Dipl.-Ing.

(56) Entgegenhaltungen:
- EP-A- 0 329 544
- DE-A- 4 133 175
- DE-C- 965 012

## Beschreibung

Die Erfindung betrifft ein Filter nach dem Oberbegriff des Anspruchs 1 bzw. des Anspruchs 3.

Aus dem DE-U- 92 09 362 ist eine Filtervorrichtung zum Filtern von Gasen und/oder Flüssigkeiten bekannt. Diese Filtervorrichtung besteht aus einem Filterelement, das ein zick-zack-förmig gefaltetes Filtermedium aufweist, einem Halterahmen in den das Filterelement einsetzbar ist und einem Grundkörper in welchen der Haltrahmen eingesetzt wird. Durch die Ausgestaltung eines Halterahmens soll die Menge an Abfallmaterial beim Austausch des Filterelements reduziert werden.

Ein Nachteil des bekannten Filters ist jedoch darin zu sehen, daß der Halterahmen als zusätzliches Bauteil den Aufwand für ein solches Filter erhöht. Außerdem erfordert der Halterahmen zusätzlichen Raum, welcher für die filterwirksame Fläche des Filtermediums verlorengeht.

Es ist weiterhin aus dem DE-U- 91 16 747 ein Filter mit einer in einem Filtergehäuse angeordneten Filterkassette bekannt. Auch hier ist das Filterelement ein zick-zack-förmig gefaltetes Filtermedium. Das Filterelement ist in einem Aufnahmerahmen angeordnet. Dieser Aufnahmerahmen wird in einen Halterahmen eingeschnappt. Auch hier besteht der Nachteil, daß mehrere Komponenten erforderlich sind, die selbstverständlich die Herstellung eines solchen Filters aufwendig gestalten.

Der Erfindung liegt die Aufgabe zugrunde, ein Filter zu schaffen, das eine geringe Anzahl von Bauteilen aufweist, welches in einfacher Weise aufgebaut ist und zuverlässig wirksam ist.

Diese Aufgabe wird ausgehend von dem Oberbegriff der unabhängigen Ansprüche durch deren kennzeichnenden Merkmale gelöst.

Der wesentliche Vorteil der Erfindung ist darin zu sehen, daß für das Filterelement kein zusätzlicher Rahmen erforderlich ist, mit dem eine Abdichtung dieses Elements in dem Gehäuse erfolgt.

Die Erfindung macht sich die Eigenschaft zunutze, daß Teile des Filterelements als Dichtungen geeignet sind. Diese Dichtungen, die somit Bestandteile des Filterelements sind, können zweckmäßigerweise aus dem gleichen Material hergestellt sein, aus dem auch das zick-zack-förmig gefaltete, filterwirksame Medium hergestellt ist. Damit ist ein problemloses Entsorgen des austauschbaren Elements möglich. Die Dichtung für das Filterelement hat die Form einer Rolldichtung, das heißt, sie besteht im wesentlichen aus einem flächigen Material, das sich an eine gekrümmte Ebene des Filtergehäuses anschmiegt.

Gemäß der Erfindung ist an den Seitenflächen des Filterelements ein Abdichtband vorgesehen. Dieses Abdichtband hat zwei Funktionen. Zum einen sorgt es für eine wirksame Abdichtung der seitlichen Öffnungen des zick-zack-förmig gefalteten Filterelements. Zum anderen bildet das Filterelement im überstehenden Bereich die Rolldichtung.

Gemäß einer Ausgestaltung der Erfindung erfolgt die Abdichtung an den Längsseiten des zick-zack-förmig gefalteten Filterelements über eine Labyrinthdichtung. Diese Labyrinthdichtung ist nach Art einer Schwerthalterung an dem Filtergehäuse angeordnet. Diese Schwerthalterung greift in eine Falte des zick-zack-förmig gefalteten Filterelements ein. Zusätzliche Dichtelemente sind dann an diesen Seiten nicht mehr erforderlich.

Gemäß einer alternativen Ausgestaltung der Erfindung ist das Filterelement mit einem Aktivkohlefilter kombiniert. Dieser Aktivkohlefilter ist dem Filterelement als kompakte Filtermatte nachgeschaltet sein. Zum Abdichten sowohl des Aktivkohlefilters als auch des Filterelements ist ebenfalls eine Rolldichtung geeignet. Diese Rolldichtung ist an dem Filterelement angeordnet und umfasst die Aktivkohlefiltermatte.

Weiterbildungsgemäß kann die Aktivkohlefiltermatte aufgrund ihrer Elastizität abdichtend in das Filtergehäuse eingefügt werden. Hierzu muß die Aktivkohlefiltermatte lediglich geringfügig größere Abmessungen als der vorgesehene Ausschnitt aufweisen.

Ausführungsbeispiele der Erfindung sind in den Zeichnungen dargestellt und werden im folgenden näher erläutert. Die Zeichnungen zeigen:
- Figur 1: die perspektivische Darstellung eines Filter,
- Figur 2: eine Variante eines Filters,
- Figur 3: ein Kombinationsfilter.

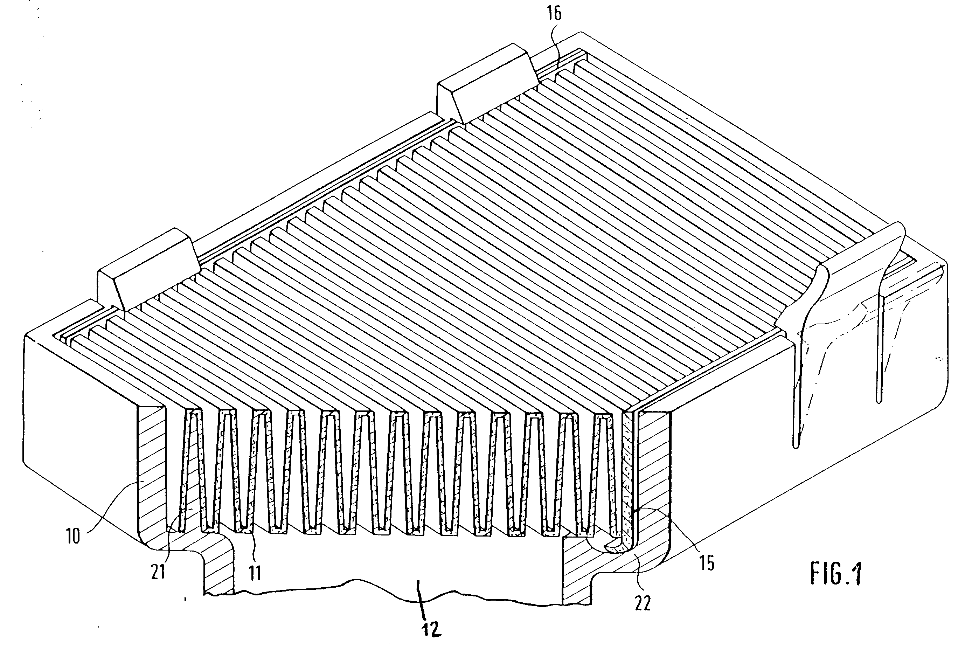

In Figur 1 ist ein Filter dargestellt, bestehend aus einem Filtergehäuse 10, welches bevorzugt aus Kunststoff besteht. In diesem Filtergehäuse 10 ist ein zick-zack-förmig gefalteter Filtereinsatz 11 als Filterelement angeordnet. Die zu filternde Luft strömt von oben den Filtereinsatz 11 an und verläßt das Filter über den Reinluftauslaß 12. Der Filtereinsatz 11 weist an den Seitenflächen jeweils ein Abdichtband 15 auf. Dieses Abdichtband besteht beispielsweise aus dem Material des Filtereinsatzes und ist mit diesem adhäsiv verbunden.

An dem Filtergehäuse 10 befindet sich eine Schwerthalterung 21. Das Abdichtband 15, 16 ist an dem unteren Ende in Form einer Rolldichtung ausgestaltet, das heißt, es ist geringfügig höher als der Filtereinsatz 11. Beim Einschieben des Filtereinsatzes 11 in seine Endposition schiebt sich das Abdichtband längs der konkaven Wölbung 22 des Filtergehäuses. Aufgrund der inneren Elastizität des Abdichtbandes 15, 16 wird eine wirksame Abdichtung an diesen Seitenflächen erzielt.

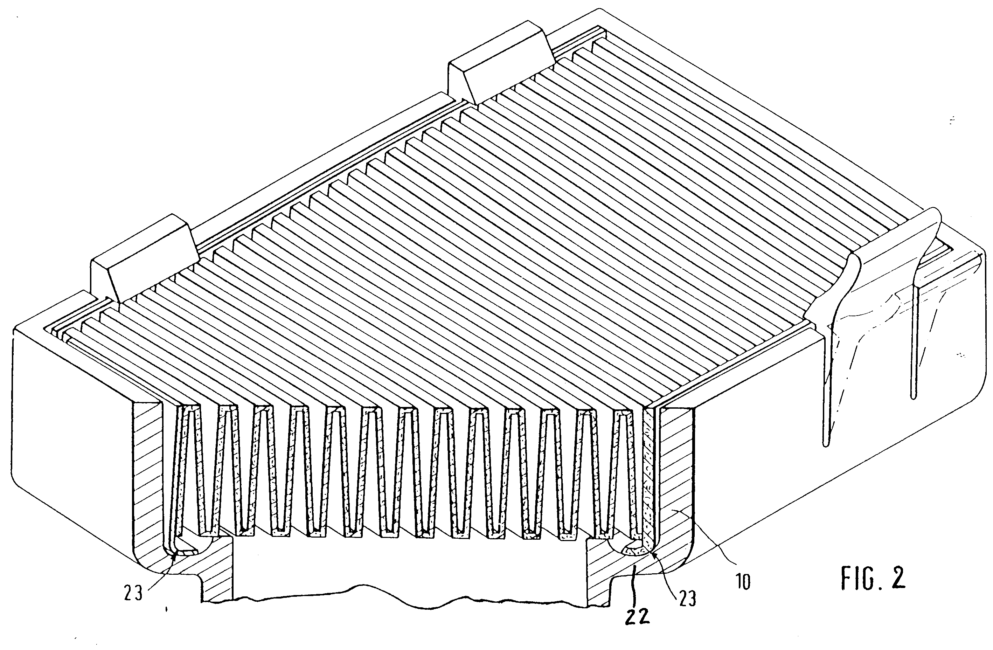

Figur 2 zeigt eine weitere Variante. Bei dieser liegt ebenfalls die Rolldichtung an der Wölbung 22 des Filtergehäuses 10 an. Anstelle einer Schwerthalterung wie in Figur gezeigt, sind auch die Schmalseiten des Filtereinsatzes mit solchen Rolldichtungen 23 ausgestattet.

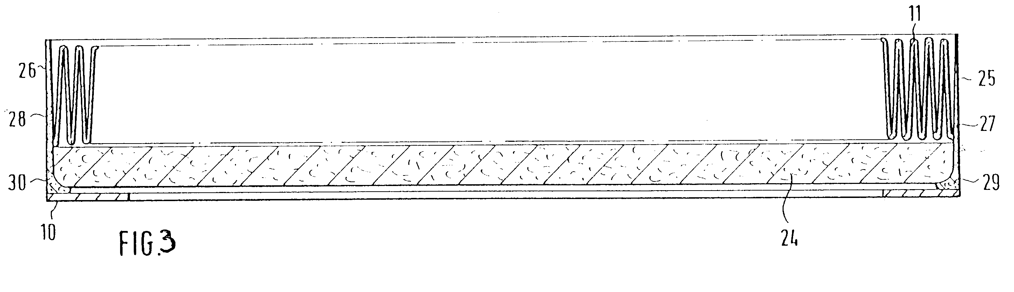

In Figur 3 ist schematisch ein Kombinationsfilter dargestellt. Ein solches Kombinationsfilter dient vor allem zur Filtrierung der Luft für den Innenraum eines Kraftfahrzeugs. Ein solches Kombinationsfilter besteht aus einem zick-zack-förmig gefalteten Filtereinsatz 11 der als Partikelfilter wirksam ist. Dem Filtereinsatz 11 ist ein Aktivkohlefilter 24 nachgeschaltet. Das Aktivkohlefilter dient zur Minimierung der Geruchsbelästigung im Fahrzeug und zum Filtern schädlicher Gase. Es ist als Filtermatte dem Filtereinsatz 11 nachgeschaltet. Die Seitenflächen 25, 26 des Filtereinsatzes 11 sind mit jeweils einem Abdichtband 27, 28 versehen. Dieses Abdichtband weist am unteren Bereich jeweils eine Rolldichtung 29, 30 auf. Das Aktivkohlefilter 24 wird von der Rolldichtung 29, 30 umfasst und ist damit an dem Filtereinsatz 11 fixiert. Gleichzeitig erfolgt über diese Rolldichtung 29, 30 die Abdichtung des Filtereinsatzes 11 an dem Filtergehäuse 10.

Selbstverständlich können die hier vorgestellten Dichtungsarten in beliebiger Weise kombiniert werden. So können beispielsweise die vier Seitenflächen des Filtereinsatzes mit einer Rolldichtung ausgebildet sein. Ebenso besteht die Möglichkeit, nur zwei Seitenflächen mit Rolldichtung und zwei Seitenflächen mit einer Schwerthalterung abzudichten.

## Patentansprüche

1. Filter mit einem in einem Filtergehäuse angeordnetem Filterelement, welches aus einem zick-zack-förmig gefaltetem Filterpapier oder -vlies besteht und welches im wesentlichen plattenförmig ausgestaltet ist, dadurch gekennzeichnet, daß zum Abdichten des Filterelements (11) in dem Filtergehäuse (10) an wenigstens zwei Seitenflächen (13, 14) jeweils ein Abdichtband (15, 16) vorgesehen ist und dieses Abdichtband (15, 16) geringfügig höher als das Filterelement (11) ist und die Höhendifferenz eine Rolldichtung (23) derart bildet, daß sich beim Einschieben des Filterelement (11) in seine Endposition das Abdichtband (15, 16) längs einer konkaven Wölbung (22) des Filtergehäuses schiebt.

2. Filter nach Anspruch 1, dadurch gekennzeichnet, daß an dem Filtergehäuse wenigstens eine Schwerthalterung (21) vorgesehen ist, welche in eine Falte des zick-zack-förmigen Filterelements (11) eingreift und die Schwerthalterung (21) eine Labyrinthdichtung bildet.

3. Filter mit einem in einem Filtergehäuse angeordnetem Filterelement, welches aus einem zick-zack-förmig gefaltetem Filterpapier oder- vlies besteht und welches im wesentlichen plattenförmig ausgestaltet ist, dadurch gekennzeichnet, daß in Kombination mit dem Filterelement (11) ein Aktivkohlefilter (24) in Form einer Matte vorgesehen ist und zum Abdichten des Filterelements in dem Filtergehäuse an wenigstens zwei Seitenflächen (25, 26) jeweils ein Abdichtband (27, 28) vorgesehen ist, wobei das Abdichtband (27, 28) eine Rolldichtung (29, 30) aufweist, derart, daß das Aktivkohlefilter (24) von der Rolldichtung (29, 30) umfaßt und damit an den Filtereinsatz (11) fixiert wird und wobei gleichzeitig über diese Rolldichtung (29, 30) die Abdichtung des Filtereinsatzes (11) an dem Filtergehäuse (10) erfolgt.

4. Filter nach Anspruch 3, dadurch gekennzeichnet, daß die Aktivkohlematte (24) geringfügig größer als das Filtergehäuse (10) ist, beim Einlegen in das Filtergehäuse komprimiert wird und damit eine Dichtwirkung erzielt.

## Claims

1. Filter, having a filter element disposed in a filter housing, which element comprises a filter paper or web folded in a zigzag-shaped manner and has a substantially plate-like configuration, characterized in that, for sealing the filter element (11) in the filter housing (10), a respective sealing strip (15, 16) is provided on at least two lateral faces (13, 14), and this sealing strip (15, 16) is slightly higher than the filter element (11), and the difference in height forms a rolling seal (23) in such a manner that, when the filter element (11) is slipped into its end position, the sealing strip (15, 16) slides along a concavely curved portion (22) of the filter housing.

2. Filter according to claim 1, characterised in that at least one tongue-like holder (21) is provided on the filter housing, said holder engaging in a fold of the zigzag-shaped filter element (11), and the tongue-like holder (21) forms a labyrinth seal.

3. Filter, having a filter element disposed in a filter housing, which element comprises a filter paper or web folded in a zigzag-shaped manner and has a substantially plate-like configuration, characterized in that, in combination with the filter element (11), an active carbon filter (24) is provided in the form of a mat and, for sealing the filter element in the filter housing, a respective scaling strip (27, 28) is provided on at least two lateral faces (25, 26), the sealing strip (27, 28) having a rolling seal (29, 30) in such a manner that the active carbon filter (24) is surrounded by the rolling seal (29, 30) and, in consequence, is secured to the filter insert (11), and the sealing of the filter insert (11) on the filter housing (10) being simultaneously effected via this rolling seal (29, 30).

4. Filter according to claim 3, characterised in that the active carbon mat (24) is slightly greater than the filter housing (10), is compressed when inserted into the filter housing and thereby achieves a sealing effect.

## Revendications

1. Filtre comprenant un élément de filtre placé dans un corps de filtre, cet élément étant constitué d'un papier ou d'une nappe non tissée de filtre repliée en zigzag et se présente essentiellement sous la forme d'une plaque,
caractérisé en ce que
pour assurer l'étanchéité de l'élément de filtre (11), le boîtier (10) recevant le filtre comporte, sur au moins deux surfaces latérales (13, 14), chaque fois une bande d'étanchéité (15, 16), et cette bande d'étanchéité (15, 16) est légèrement plus haute que l'élément de filtre (11) et la différence de hauteur forme un joint à enroulement (23) de façon que, lorsqu'on introduit l'élément de filtre (11) dans sa position finale, la bande d'étanchéité (15, 16) glisse le long de la courbure concave (22) du boîtier de filtre.

2. Filtre selon la revendication 1,
caractérisé en ce que
le boîtier de filtre comporte au moins un support en forme de dard (21) venant prendre dans un pli de l'élément de filtre (11) en forme de zigzag et le support en forme de dard (21) réalise un joint en labyrinthe.

3. Filtre comprenant un élément de filtre placé dans un boîtier de filtre, cet élément formé de papier ou d'une nappe non tissée de filtre, plié en zigzag, ayant essentiellement une forme de plaque,
caractérisé en ce qu'
en combinaison avec l'élément de filtre (11) il est prévu un filtre à charbon actif (24) sous la forme d'une nappe et pour assurer l'étanchéité de l'élément de filtre dans le boîtier, sur au moins deux surfaces latérales (25, 26), il est prévu chaque fois une bande d'étanchéité (27, 28) et la bande d'étanchéité (27, 28) comporte un joint de roulement (29, 30) pour que le filtre à charbon actif (24) soit entouré par le joint à enroulement (29, 30) et bloque ainsi la garniture de filtre (11), et en même temps ce joint à enroulement (29, 30) réalise l'étanchéité de la garniture de filtre (11) par rapport au boîtier de filtre (10).

4. Filtre selon la revendication 3,
caractérisé en ce que
la nappe de charbon actif (24) est légèrement plus grande que le boîtier de filtre (10) et cette nappe est comprimée lorsqu'elle est placée dans le boîtier de filtre pour créer ainsi un effet d'étanchéité.
